# EUROPEAN PATENT APPLICATION

(11) **EP 2 334 009 A1**
(43) Date of publication of application: **15.06.2011**
(21) Application number: 09817196.0
(22) Date of filing: 07.08.2009
(51) Int. Cl.: H04L 12/14

(54) **REALIZING METHOD AND DEVICE FOR INDEPENDENT VC SYSTEM COMPATIBLE WITH DIFFERENT CHARGE CARDS**

(30) Priority: 26.09.2008 CN 200810166920
(71) Applicant: ZTE Corporation, Shenzhen, Guangdong 518057 (CN)
(72) Inventor: LIU, Tao, Guangdong 518057 (CN); XU, Xiaoqin, Guangdong 518057 (CN); SHEN, Song, Guangdong 518057 (CN)
(74) Representative: Ilgart, Jean-Christophe
(86) International application number: PCT/CN2009/073150
(87) International publication number: WO 2010/037282

(57) **Abstract**

The present invention provides a method and a device for realizing the independent VC system compatible with different voucher cards. The realizing method regards the combination of the card number and the password of the old system as card password of the new system and stores it in the new system; generates a unique new card number for each old card number according to the encoding rule of the new system; establishes a contrast list of the new and old card numbers, which is configured to store a one-to-one corresponding relationship between the new card number and the old card number. The device includes a password combination unit, a new card number generation unit, a contrast list of the new and old card numbers, a judgment unit, a query unit and a serial number transformation unit. The present invention realizes that the voucher card using the card number plus password charge mode is compatible with the original system supporting the password charge mode only, and also causes the actual serial number of the voucher card after being transformed into the storage serial number to be stored in a database, and causes the query results to be displayed with the actual serial number, thereby enhances the query efficiency of the voucher card without changing the user's using experience.

## Description

### Field of the Invention

The present invention relates to the communication field, in particular, to a method and a device for realizing different charge modes in independent VC (Voucher Center) system.

### Background of the Invention

In current intelligent network, a lot of prepaid and postpaid services are provided and generally supported by voucher platforms so as to facilitate users to charge and to pay charge. However, a lot of voucher platforms are single-network and single-service voucher platforms, and generally can only support the charge of the prepaid or postpaid user of a certain service of a certain network type, and the access mode is relatively singular. In order to provide more consummate charge and pay charge service, a new voucher platform, called independent VC system or comprehensive VC system, is needed to be built. There are the following three types of solutions for realizing the independent VC system:

The first type is the full-intelligent network solution.

It is completely built on the basis of the intelligent network with the carrier network being signaling network. The charge service function is completed on the SCP (Service Control Point) entity, while the SCP assumes the service flow control, service logic control and charge service treatment. The part of the management and authentication of a voucher card is accomplished by the voucher platform, i.e., in the full-intelligent network solution, the voucher platform merely completes the functions of card management and card authentication. The access portion IVR (Interactive Voice Response) is realized by SCP, and for the charge access of the self-service platforms such as SMS (Short Message Service), USSD (Unstructured Subscriber Service Data), WAP (Wireless Application Protocol) or WEB, the connection needs to be realized by the self-service platform and SCP of the accessed place via the interface.

The full-intelligent network mainly has two characteristics: firstly, the carrier network is the signaling network; and secondly, SCP realizes most of the functions of the voucher platform system, which is also the main feature of the intelligent network service. By this solution, if the support for a newly added charge service need to be provided, SCP needs to be reconstructed greatly, however, the period of SCP reconstruction is long, and the costs of reconstruction is high. Therefore, the full-intelligent network solution is inconvenient for supporting the newly added service.

The second type is the semi-intelligent network solution.

The semi-intelligent network solution is that the charge logic control and charge treatment functions assumed by SCP are peeled off, and these two functions are completed by a universal voucher platform. The universal voucher platform accomplishes the functions such as logic treatment of charge service, judgment of prepaid/postpaid information of the charged user, card management and card authentication. SCP realizes the IVR charge access and the home routing of the charged account book; and for the charge access of the self-service platforms such as SMS, USSD, WAP or WEB, the connection with the voucher platforms can be realized directly via the interface.

The three characteristics of the semi-intelligent network solution are that: firstly, the carrier network is a mixture of the signaling network and the data network; secondly, the voucher platform has independent functions to accomplish most functions of the charge service; and thirdly, the charge service is basically peeled off from the SCP entity, and SCP only realizes the access function. This solution can flexibly support the charge service, while the whole system is built on the basis of the mixture of the service network and the supporting network, the construction for the network is complex, and the expansibility is limited by the signaling network; and if the IVR functions needed to be updated, SCP also needs to be reconstructed.

The third type is the unintelligent network solution.

The unintelligent network solution is to build the universal voucher platform completely independently. The universal voucher platform has the functions such as independent IVR voice access, logic treatment of charge service, judgment of prepaid/postpaid information of the charged number, card management and card authentication. The charge service is completely accomplished by the universal voucher platform, and the access is realized by independent IVR which is connected to the local universal voucher platform together with the self-service platforms such as SMS, USSD, WAP or WEB.

The three characteristics of the unintelligent network solution are that: firstly, the whole system is built on the basis of the supporting network and is separated from the service network; secondly, the voucher platform is an independent entity for completing the treatment of service logic and control of the whole charge service; and thirdly, independent IVR function. By this solution, the functions of the universal voucher platform are quite centralized and independent, and higher requirements are exerted on the universal voucher platform. The IVR employs an independent mode, only is responsible for access, and the function is singular. The whole system is built on the basis of the supporting network and is separated from the service network, which avoids the mutual influence between the service network and the supporting network, and the whole system structure is relatively unified and simplified, and thereby is capable of better supporting the service functions.

The full-intelligent network solution and the semi-intelligent network solution are basically reconstructed on the basic of the original service network, therefore, they are not easier than the unintelligent network solution in the implementation of the solutions. Moreover, for these two solutions, the requirements to the reconstruction of related systems is quite high, and the whole system will be very complex, while the advantage is the high utilization ratio of the original resource, which can quickly accomplish the project implementation. It is quite easy to carry out the unintelligent network solution, and the system is independent, simple with no need to reconstruct the original system, but the utilization ratio of the original resources is low, and the investment is large. The unintelligent network solution has certain advantages in the aspects such as expansibility, support to the full service, user experience, flexibility of the service and risk in carrying out the solution. Therefore, the independent VC system generally uses the unintelligent network mode.

The independent VC system can provide the operations of charge and query of the voucher card.

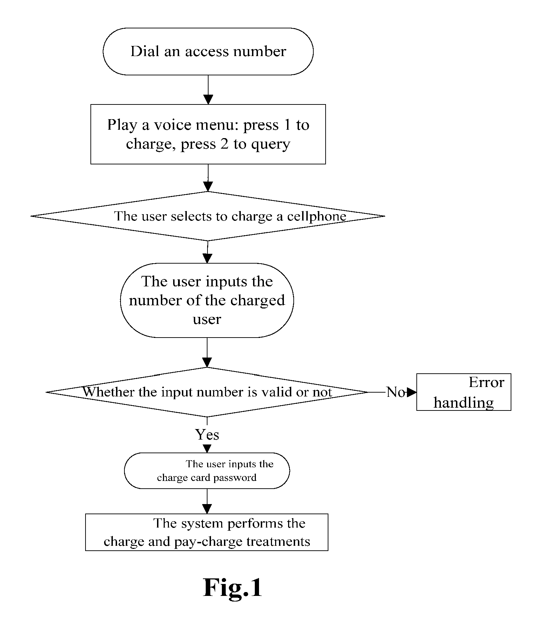

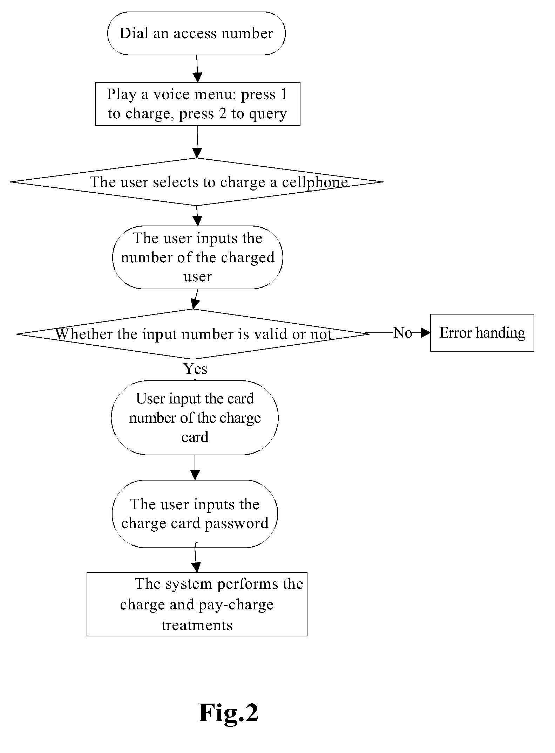

When the independent VC system is used for the charge operation, the information of charged user and the information related to the voucher card should be input so as to verify the charged user and the validity of the voucher card, and further to perform the charge operation; wherein, the information of the voucher card to be input by the user is classified into two situations. Take IVR access mode as an example: one type is called password charge mode which merely needs the user to input the password of the voucher card. As shown in Figure 1, after the user dials the access number, the cellphone charge is selected, and the charged number and the password of the voucher card is input. The password charge mode is adapted to the situation when the length of the password digits is long. In this situation, the passwords in the system will not be repeated, and are not easy to be guessed; and therefore, only the password is needed. The other type is called card number plus password charge mode which needs the user to input the voucher card number and the password. As shown in Figure 2, after the user dials the access number, performing the operations of selecting the cellphone charge, and only after inputting the charged number, the card number of the voucher card and the voucher card password can charge be made. The card number plus password charge mode is adapted to the situation when the length of password digits is short. In this situation, the passwords in the system may be repeated and are easy to be decrypted; and therefore, the card number and the password should be simultaneously verified.

Since the processes of the above two charge modes are different, the current independent VC system generally merely supports either one kind of charge mode thereof. If the charge mode of the old system is the card number plus password mode, while the charge mode of the new system is the password mode, the voucher card of the old system cannot perform the charge operation in the new system. In addition, when querying the voucher card information, since the rule of encoding the card number of the new system is different from that of the old system, the card number of the old system cannot be directly used for query. In order to enable the voucher card of the old system to be used in the new system, and to maintain the user's using experience, the mode by which the new system is compatible with the old system is needed, and the least alteration to the new system is the best.

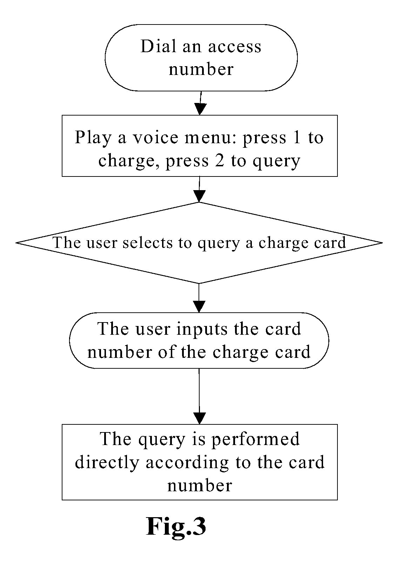

Moreover, when querying the voucher card information in the independent VC system, the card number information of the voucher card should be input. The process of query is as shown in Figure 3. The management to the voucher card in the current independent VC system generally is performed with the card number of the voucher card, and most of which is batch-operation. The card numbers of the voucher cards are usually continuously increased digits, and then, when the operation is made to a batch of cards, the required card can be selected merely by comparing the values of the card numbers. Since the card numbers are continuous, and the efficiency of mode of comparing the card numbers is quite high, the storage of the card numbers in the database is actually accomplished by directly storing the card numbers, thus, the storage and display modes of the card numbers are consistent. The card numbers of the voucher cards are usually random. The voucher cards in some independent VC system are managed by the serial numbers. The serial number is usually constituted by the letters and digits, for instance, it is constituted by one letter + seven-digit serial number used as low digits + "-" + two-digit serial number used as high digits, for example, S6069507-00; wherein, the letters are A, B...Z; the serial number used as low digits are 0000000-9999999; the serial number used as high digits are 00-99. The encoding rule of the serial numbers is: for the same capital letter, for example the capital letter S, the serial numbers start from S0000000-00 and end at S9999999-99; the sequence is S0000000-00... -S9999999-99, S0000000-01, S0000000-01... S9999999-99. Thereby, the serial numbers are no longer continuously increased numbers. If the original method is still employed, which is directly storing according to the serial number rule, it will be very inconvenient in the batch-operation, and affect the query efficiency.

### Summary of the Invention

The present invention, regarding the problem that the voucher card type supported by the current independent VC system is singular, provides a method and a device for realizing the independent VC system compatible with different voucher cards. By this method and device, the voucher card compatible with the card number plus password charge mode can be realized by making small alteration to the independent VC system supporting the password charge mode without changing the user's using experience. In order to simplify the expressions, hereafter, the independent VC system supporting the password charge mode is called "new system", the voucher card with the password charge mode is called "new card"; and the independent VC system supporting the card number plus password charge mode is called "old system", and the voucher card with the card number plus password charge mode is called "old card".

In order to solve the above technical problem, the method for realizing the independent VC system compatible with different voucher cards provided in the present invention comprises:
storing in a new system a combination of the card number and the password of the old system as a card password of the new system; generating a unique new card number for each old card number according to the encoding rule of the new system; and establishing a contrast list of the new and old card numbers, which is configured to store a one-to-one corresponding relationship between the new card number and the old card number.

In order to make it easy for query and comparison, as a preferred solution, the present invention further transforms the actual serial number constituted by the letters and digits into the storage serial number of pure digits to be stored in the database, and causes query results to be displayed with the actual serial number.

The device for the independent VC system compatible with different voucher cards provided in the present invention comprises a password combination unit, a new card number generation unit, a contrast list of the new and old card numbers, a judgment unit and a query unit; wherein, the password combination unit is configured to regard a combination of card number and password of an old system as card password of a new system and to store it in the new system; the new card number generation unit is configured to generate a unique new card number for each old card number according to an encoding rule of the new system; the contrast list of the new and old card numbers is configured to store a one-to-one corresponding relationship between the new card number and the old card number; the judgment unit is configured to judge whether a card number input by a user is an old card number or a new card number; and the query unit is configured to find a corresponding new card number from the contrast list of new and old card numbers according to the old card number input by the user.

Further, the above device also comprises a serial number transformation unit which is configured to store a storage serial number of pure digits which is transformed from the actual serial number constituted by the letters and digits in a database.

In the independent VC system, the present invention realizes that the card number plus password charge mode is compatible with the original system which supports the password charge mode only, by the mode of combining the card number and the password as the new password; and accomplishes the objective of querying the cards in the different card number encoding rules by establishing the corresponding relationship between the new and old card numbers. Moreover, since it is more effective to compare the digit-type fields, the present invention enhances the query efficiency of the voucher cards without changing the user's using experience by storing the actual serial number after transforming the format and separating the storage format and display format of the serial number.

### Description of the Figures

The accompanying drawings, constituting a part of the application for further understanding the present invention, show the embodiments of the present invention, and illustrate the present invention but not unduly limit the present invention. In the drawings:
Figure 1 is the charge flow chart of password charge mode;
Figure 2 is the charge flow chart of card number plus password charge mode;
Figure 3 is the flow chart of querying the voucher card by inputting the card number of the voucher card;
Figure 4 is the flow chart of querying different voucher cards in the independent VC system according to the embodiments of the present invention;
Figure 5 is the flow chart of charging different voucher cards in the independent VC system according to the embodiments of the present invention;
Figure 6 is the transformation flow chart of creating the storage serial number voucher cards according to the embodiments of the present invention; and
Figure 7 is the transformation flow chart of querying the storage serial number voucher cards according to the embodiments of the present invention.

### Detailed Description of Exemplary Embodiments

### Functionality Summary

In view of the problem that the charge type supported by the independent VC system is singular in the related technology, the embodiments of the present invention provide a method and a device for realizing the independent VC system compatible with different voucher cards. The objective that the card number plus password charge mode is compatible with the original system only supporting the password charge mode is realized by the mode of using a combination of the card number and password of the card number plus password voucher card as the new password, generating a unique new card number for each old card number according to the encoding rule of the new system, and establishing a contrast list of the new and old card numbers.

In order to further illustrate the technical means used for achieving the predetermined objective of the present invention and the effects, hereafter, the method and device for realizing the independent VC system compatible with different voucher cards provided in the embodiments of the present invention will be explained in detail with reference to the drawings and the embodiments.

### Method Embodiments

To use an old card in a new system to mainly support the query and charge functions of the old card, the present embodiment should cut over the data of the voucher card of the old system into the new system.

In order to support the card number plus password charge mode, during the process of cutting over, the combination of the card number and password of the old card is stored as card password of the new system. Supposing the card number of the old card is 123456789, and password of the old card is 654321, the password of the old card is combined to be 123456789654321 in the new system. Therefore, only when the card number and the password are correct at the same time, the charge can be successful, the function of which is the same as that in the old system.

In order to support the query of the charge situation of the old card in the new system, during the process of cutting over, a unique new card number is generated for each old card number according to the encoding rule of the new system, and the corresponding relationship between the new card number and the old card number is stored in the contrast list of the new and old card numbers. The new card number is randomly generated according to the encoding rule of the new system, and is unique in the system; moreover, each old card number is uniquely corresponding to one new card number. For example, if the card number of the old card is 123456789, the new card number generated in the new system is 1000567890, then, their corresponding relationship in the contrast list of the new and old card numbers is reflected as follow:

| Old Card Number | New Card Number |
|---|---|
| 123456789 | 1000567890 |
| ... | ... |

In the embodiments of the present invention, the function of querying the charge situation of the old card in the new system is realized with low cost of reconstruction by the aforementioned transformation mode of the new and old card numbers. Otherwise, in order to identify and manage the old cards in the new system, the new system should be needed a reconstruction to a large extent, which not only increases the cost of reconstruction , but also add the complication of the system.

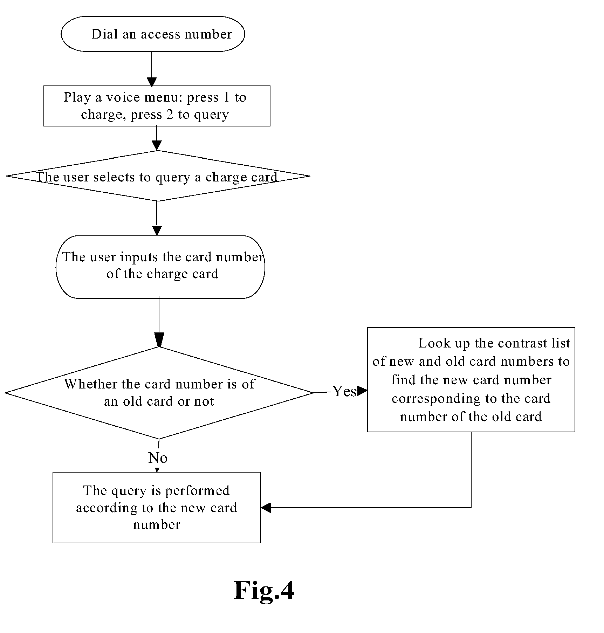

As shown in Figure 4, the specific process of querying the voucher card information in the independent VC system according to the method provided in the embodiments of the present invention is as follow.

The user selects a voucher card query operation according to a voice prompt after dialing an access number, and then inputs a card number of the voucher card. At this moment, the system will judge whether the voucher card to be queried is a new card or an old card. The procedure will not be changed if it is the new card, and the card number of the new card is directly used for the query; the system will find the new card number corresponding to this card number by querying a contrast list of the new and old card numbers if it is the old card, and then, the query is performed according to the new card number. Thereby, the subsequent treatment of the voucher card query in the system is unchanged. It can be seen that, the user only needs to input the card number of the voucher card no matter it is the new card or the old card, therefore, the user's using experience is ensured to be retained.

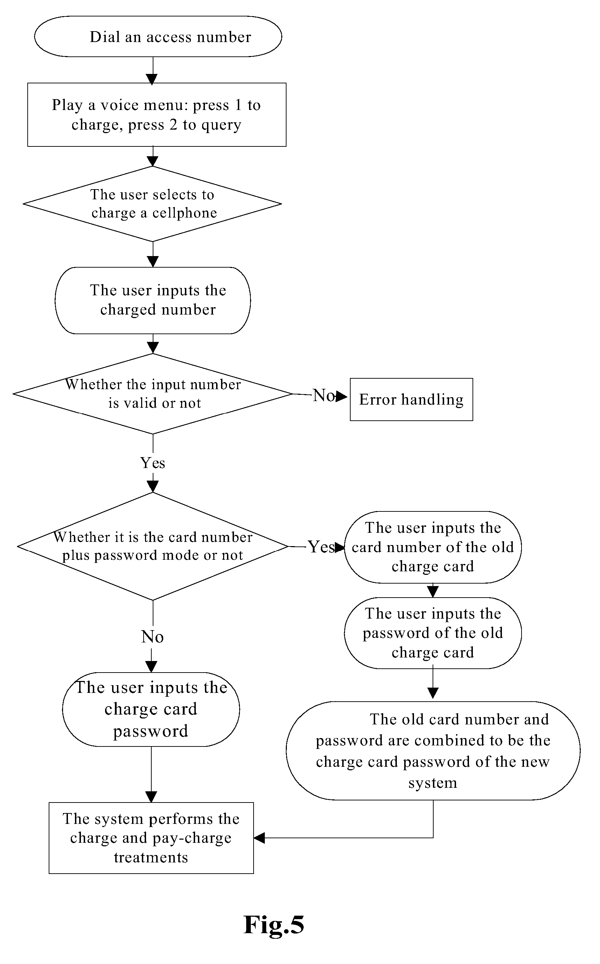

As shown in Figure 5, the specific process of charging the voucher card in the independent VC system according to the method provided in the embodiments of the present invention is as follow.

The user selects a voucher card charge operation according to a voice prompt after dialing an access number, and the system will judge whether the user charges an old card or a new card after a valid charged number is input. The procedure will not be changed if it is the new card, and the user only needs to input the password of the voucher card; however, the user firstly inputs the card number of the voucher card if it is the old card, then inputs the voucher card password, after that, the system uses a combination of the card number and the password as a voucher card password in the new system to be performed the subsequent charge and payment treatment. Thereby, the subsequent charge and payment treatments in the system need not to be changed. It can be seen that no matter it is a new card user or an old card user, the user's using experience is unchanged.

Therefore, the independent VC system according to the embodiments of the present invention is capable of realizing the simultaneous compatibility with the voucher card of the password charge mode and the voucher card of the card number plus password charge mode, and further sufficiently multiplexing the treating modes of new system while realizing the functions of the old card to make least modification to the new system.

Further, according to the method provided in the embodiments of the present invention, an actual serial number constituted by letters and digits is stored in the database after transformed into the storage serial number of pure digits according to a certain rule, and the query results are displayed with the actual serial number. Hereafter, the application process of the method is illustrated with the storage and display of the serial number of the voucher card. The storage of the serial number takes the creation of the voucher card as an example; and the display of the serial number takes the query of the voucher card as an example.

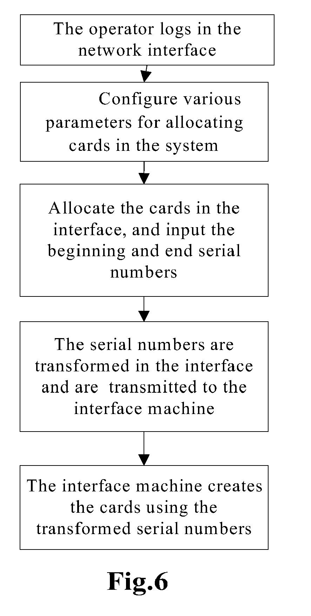

The process of creating the voucher card is as shown in Figure 6. The operator inputs an actual serial number in an interface. This serial number is constituted by one letter + seven-digit serial number used as low digits + "-" + two-digit serial number used as high digits. After that, this serial number is transformed within the system according to the following transformation rule.

The letters A-Z are transformed into 10-35, for instance, A is transformed into 10, B is transformed into 11 ... and Z is transformed into 35; next are the two-digit serial number used as high digits, and in the end are the seven-digit serial number used as low digits. For example, A1234567-34 is transformed into 10341234567 and A1235000-34 is transformed into 10341235000. Since the comparison of sizes between the digit-type fields is more effective, the query efficiency of the voucher cards can be effectively enhanced after the letters are transformed into digits.

The system transmits the transformed serial number to an interface machine and the interface machine uses the transformed serial number to perform the operation of creating the voucher card.

Thereby, the storage serial number stored in the database is represented by the transformed integer. During the query and sequencing by the sql statement, the batch-operation to the voucher cards can be conveniently and effectively performed directly by this shaped field.

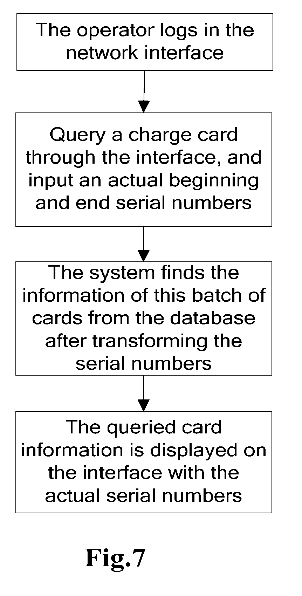

The process of querying the voucher card is as shown in Figure 7. When querying a voucher card through the interface, the operator firstly inputs actual start and end serial number in the interface, then, the system finds the information related to this batch of cards in the database by the sql statement after transforming the actual serial number into the format stored in the database, finally, the queried card information is displayed on the interface, and the actual serial number to which the storage serial number is transformed in the database is displayed on the interface using the transformation rule opposite to that used in creating the card.

Owing to the above, the method for realizing independent VC system compatible with different voucher cards provided in the embodiments of the present invention is capable of realizing that the card number plus password charge mode is compatible with the original independent VC system which only supports the password charge mode.

According to the embodiments of the present invention, a computer readable medium is further provided, and this computer readable medium is stored with the commands executable by computer. When the commands are executed by the computer or processor, the computer or processor is made to execute the treatment of each of the steps as shown in Figure 4 to Figure 7. Preferably, one or more of the above method embodiments can be executed.

### Device Embodiments

The embodiments of the present invention further provide a device for independent VC system compatible with different voucher cards, which comprises a password combination unit, a new card number generation unit, a contrast list of the new and old card numbers, a judgment unit, a query unit and a serial number transformation unit; wherein the password combination unit is configured to store in a new system a combination of the card number and the password of an old system as card password of the new system ; the new card number generation unit is configured to generate a unique new card number for each old card number according to an encoding rule of the new system; the contrast list of the new and old card numbers is configured to store a one-to-one corresponding relationship between the new card number and the old card number; the judgment unit is configured to judge whether a card number input by a user is an old card number or a new card number; the query unit is configured to find the corresponding new card number from the contrast list of the new and old card numbers according to the old card number input by the user; and the serial number transformation unit is configured to transform an actual serial number constituted by the letters and digits into the storage serial number of pure digits and to store it in the database.

The serial number transformation unit can transform the actual serial number constituted by one letter + seven-digit serial number used as low digits + "-" + two-digit serial number used as high digits into the storage serial number according to such transformation rule as: transforming the letters A-Z into a two-digit number, next are two-digit serial number used as high digits, and in the end are seven-digit serial number used as low digits; wherein, the letters A-Z can be transformed into 10-35" for instance, A is transformed into 10, B is transformed into 11 ... and Z is transformed into 35.

After the independent VC system uses the above device, when the voucher card is queried, the serial number transformation unit is configured to transform the actual serial number input into the storage serial number according to the above transformation rule for query, and is further configured to transform the storage serial number into the actual serial number of the voucher card according to the rule opposite to the transformation rule before the query results are displayed.

Moreover, since the realization of present invention makes no amendment to the system framework and the current processing procedure, it is easy to be accomplished and is convenient to be popularized in the technical field, and possesses strong industrial applicability.

It should be indicated that the steps shown in the flow charts of the drawings can be executed in a computer system with, for instance, a set of commands executable by the computer; moreover, though the flow charts show the logical orders, in some circumstances, the steps shown or described can be executed in the order different from that herein.

The above is merely the preferred embodiments of the present invention and not to limit the present invention. For the person skilled in the art, the present invention may have various alterations and changes. Any modification, equivalent substitution, improvement, etc., within the spirit and principle of the present invention, should be included in the protection scope of the present invention.

## Claims

1. A method for realizing independent Voucher Center VC system compatible with different voucher cards, **characterized by** comprising: storing in a new system a combination of card number and password of an old system as a card password of the new system; generating a unique new card number for each old card number according to an encoding rule of the new system; and establishing a contrast list of new and old card numbers, which is configured to store a one-to-one corresponding relationship between the new card number and the old card number;
wherein the old system is an independent VC system supporting a card number plus password charge mode; and the new system is an independent VC system supporting a password charge mode.

2. The method for realizing independent VC system compatible with different voucher cards according to claim 1, **characterized in that** a specific process of querying information of the voucher card in the independent VC system comprises:
step 1, after dialing an access number, a user selecting a voucher card query operation according to a voice prompt;
step 2, the user inputting card number of the voucher card;
step 3, the system judging whether the voucher card to be queried is a new card or an old card; executing step 5 if it is the new card; and executing step 4 if it is the old card;
step 4, the system finding a new card number corresponding to the card number by querying the contrast list of new and old card numbers; and
step 5, performing query according to the new card number.

3. The method for realizing independent VC system compatible with different voucher cards according to claim 1, **characterized in that** a specific process of charging the voucher card in the independent VC system comprises:
step 1, after dialing an access number, a user selecting a voucher card charge operation according to a voice prompt;
step 2, the user inputting a valid charged number;
step 3, the system judging whether the user charges an old card or a new card; the user inputting the voucher card password if it is the new card; and the user firstly inputting the card number of the voucher card if it is the old card, then inputting the voucher card password, after that, the system using a combination of the card number and password as a voucher card password in the new system; and
step 4, the system performing subsequent charge process according to the password charge mode on the basis of the voucher card password obtained in step 3.

4. The method for realizing independent VC system compatible with different voucher cards according to claim 1 or 2 or 3, **characterized in that** the voucher card is managed through a serial number in the system;
an actual serial number constituted by letters and digits is stored in a database after being transformed into a storage serial number of pure digits.

5. The method for realizing independent VC system compatible with different voucher cards according to claim 4, **characterized in that** the actual serial number constituted by one letter + seven-digit serial number used as low digits + "-" + two-digit serial number used as high digits is stored in the database after a format transformation according to a transformation rule as below:
the one letter (A-Z) is transformed into a two-digit number, next are the two-digit serial number used as high digits , and in the end are the seven-digit serial number used as low digits.

6. The method for realizing independent VC system compatible with different voucher cards according to claim 5, **characterized in that**, when querying the voucher card through an interface, the system finds information related to the voucher card in the database after the format transformation of the input actual serial number into the storage serial number according to the rule, and the actual serial number of the voucher card to which the storage serial number is transformed according to a rule opposite to the transformation rule is displayed on the interface.

7. A device for independent VC system compatible with different voucher cards, **characterized by** comprising:
a password combination unit, configured to store in a new system a combination of card number and password of an old system as card password of the new system ; a new card number generation unit, configured to generate a unique new card number for each old card number according to an encoding rule of the new system; a contrast list of new and old card numbers, configured to store a one-to-one corresponding relationship between the new card number and the old card number; a judgment unit, configured to judge whether a card number input by a user is an old card number or a new card number; and a query unit, configured to find a corresponding new card number from the contrast list of new and old card numbers according to the old card number input by the user;
wherein the old system is an independent VC system supporting a card number plus password charge mode; and the new system is an independent VC system supporting a password charge mode.

8. The device for independent VC system compatible with different voucher cards according to claim 7, **characterized by** further comprising a serial number transformation unit, configured to store a storage serial number of pure digits which is transformed from an actual serial number constituted by letters and digits in a database.

9. The device for independent VC system compatible with different voucher cards according to claim 8, **characterized in that** the serial number transformation unit transforms the actual serial number constituted by one letter + seven-digit serial number used as low digits + "-" + two-digit serial number used as high digits into the storage serial number according to a transformation rule as below and stores it in the database:
the one letter (A-Z) is transformed into a two-digit number, next are the two-digit serial number used as high digits, and in the end are the seven-digit serial

10. The device for independent VC system compatible with different voucher cards according to claim 8 or 9, **characterized in that**, when querying the voucher card, the serial number transformation unit is configured to perform the query after transforming the input actual serial number into the storage serial number according to the transformation rule, and is further configured to transform the storage serial number into the actual serial number of the voucher card according to a rule opposite to the transformation rule before query results are displayed.
